(19) Europäisches Patentamt
European Patent Office
Office européen des brevets

(11) Veröffentlichungsnummer: **0 012 452**
**B1**

# (12) EUROPÄISCHE PATENTSCHRIFT

(45) Veröffentlichungstag der Patentschrift: **09.02.83**

(51) Int. Cl.³: **A 01 N 57/12**, C 07 F 9/11, C 07 F 9/17

(21) Anmeldenummer: **79105303.6**

(22) Anmeldetag: **08.06.78**

(60) Veröffentlichungsnummer der früheren Anmeldung nach Art. 76 EPÜ:

## (54) Phosphorsäureester und deren Verwendung zur Herstellung von Schädlingsbekämpfungsmitteln.

(30) Priorität: **18.06.77 DE 2727479**

(43) Veröffentlichungstag der Anmeldung: **25.06.80 Patentblatt 80/13**

(45) Bekanntmachung des Hinweises auf die Patenterteilung: **09.02.83 Patentblatt 83/6**

(84) Benannte Vertragsstaaten: **BE CH DE FR GB NL SE**

(56) Entgegenhaltungen:
**FR-A-2 140 161**
**NL-C-103 634**
**US-A-2 693 483**
**US-A-2 906 661**
**US-A-3 819 756**
**ORGANIC PHOSPHORUS COMPOUNDS, Band 7, 1976, J. Wiley & Sons, New York, US, G. M. KOSOLAPOFF, Seiten 598, 614, 635, 644**

**Die Akte enthält technische Angaben, die nach dem Eingang der Anmeldung eingereicht wurden und die nicht in dieser Patentschrift enthalten sind.**

(73) Patentinhaber: **BAYER AG, Zentralbereich Patente, Marken und Lizenzen, D-5090 Leverkusen 1, Bayerwerk (DE)**

(72) Erfinder: **Arend, Günter, Dr., Wiedstrasse 8, D-4047 Dormagen (DE)**
Erfinder: **Behrenz, Wolfgang, Dr., Untergründemich 14, D-5063 Overath (DE)**
Erfinder: **Block, Hans-Dieter. Dr., Roggendorfstrasse 65, D-5000 Köln 80 (DE)**



Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

# Phosphorsäureester und deren Verwendung zur Herstellung von Schädlingsbekämpfungsmitteln

Die vorliegende Erfindung betrifft neue Phosphorsäureester und deren Verwendung als Synergisten in insektiziden und akariziden Mitteln.

Es ist bereits bekanntgeworden, daß die folgenden Wirkstoffe bzw. Wirkstoffgruppen pestizide, insbesondere insektizide und akarizide Eigenschaften aufweisen:

A. Carbamate, wie z. B. das 2-iso-Propyl-phenyl-N-methylcarbamat, 2-(1-Methyl-allyl)-phenyl-N-Methyl-carbamat, 3-iso-Propyl-4-methoxy-phenyl-N-methyl-carbamat, 2-[1,3-Dioxolan(2)yl-phenyl]-N-methyl-carbamat, 2,2-Dimethyl-1,3-benzodioxol(4)yl-N-methyl-carbamat, 2,2-Dimethyl- bzw. 2-Methyl-2,3-dihydrobenzofuran(4)yl-N-methyl-carbamat und 2,3-Dihydro-2,2-dimethylbenzofuran(7)yl-N-acetyl-N-methylcarbamat, 3,4,5-Trimethyl-phenyl-N-methylcarbamat, 1-Naphthyl-N-methyl-carbamat

B. Carbonsäureester, wie z. B. 2,3,4,5-Tetrahydrophthalimidomethyl-chrysanthema-Essigsäure-2,2,2-trichlor-1-(3,4-dichlorphenyl)-äthylester und [3-Phenoxybenzyl]-2,2-dimethyl-3-(2,2-dichlorvinyl)-cyclopropancarboxylat

C. Phosphorsäureester, wie z. B. O,O-Dimethyl-O-(2,2-dichlorvinyl)-phosphorsäureester und O,O-Dimethyl-O-[3-methyl-4-methylthio-phenyl]-thionophosphorsäureester

D. Halogencycloalkane, wie z. B. Hexachlorcyclohexan und

E. Halogenalkane, wie z. B. 1,1,1-Trichlor-2,2-bis-(4-methoxyphenyl)-äthan.

Weiterhin sind synergistische Mischungen von Carbamaten, z. B. 2-iso-Propoxyphenyl-N-methylcarbamat oder von Phosphorsäureestern, z. B. O,O-Diäthyl-O-(2-isopropyl-4-methyl-pyrimidinyl-[6])-phosphorthioat, oder von natürlichen oder synthetischen Pyrethroiden mit Piperonyläthern, wie z. B. α-[2-(2-Butoxyäthoxy)-äthoxy]-4,5-methylendioxy-2-propyl-toluol, bekannt (vgl. Bull., Org.-Health Org. 1966, 35, Seiten 691-708, Schrader G.: Die Entwicklung neuer insektizider Phosphorsäureester 1963, S. 158; Perkov, W.: Die Insektizide, 1966, Seiten 516-524). Die Wirksamkeit dieser Synergisten ist nicht befriedigend, eine gewisse Bedeutung hat nur das α-[2-(2-Butoxy-äthoxy)äthoxy]-4,5-methylendioxy-2-propyl-toluol (Piperonylbutoxy) erlangt. Im übrigen sind die bekannten Synergisten nur aufwendig und teuer herstellbar, wodurch ihre Einsatzmöglichkeiten beschränkt werden. Das Auffinden von leicht zugänglichen und preiswerten Synergisten ist somit wünschenswert.

Es wurden nun die neuen Phosphorsäureester der allgemeinen Formel (I)

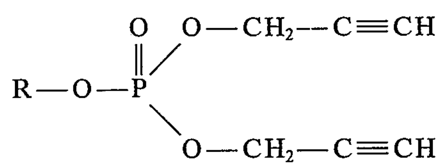

(I)

in welcher R für Alkyl mit 1 bis 4 Kohlenstoffatomen steht, gefunden.

Die Verbindungen der allgemeinen Formel I weisen in Kombination mit

A. Carbamaten, und/oder

B. Carbonsäureestern, einschließlich der natürlichen sowie synthetischen Pyrethroide

eine besonders hohe insektizide und akarizide Wirkung auf. Sie synergistische Wirkung der Verbindungen der allgemeinen Formel (I) zeigt sich bevorzugt bei den

A. Carbamaten der allgemeinen Formel (II)

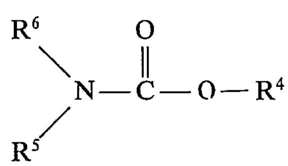

(II)

in welcher

$R^4$ für Aryl, Heterocyclus oder einen Oximrest steht,

$R^5$ für Wasserstoff oder Alkyl mit 1 bis 4 C-Atomen steht und

$R^6$ für Alkyl, Alkylcarbonyl mit 1—6 C-Atomen im Alkylrest, der gegebenenfalls auch durch Hydroxy oder Methylthio substituiert sein kann, oder den Rest —S—W, steht, wobei für einen gegebenenfalls durch Halogen substituierten aliphatischen Rest mit 1 bis 4 C-Atomen, insbesondere $CCl_3$ und $CF_3$, sowie für gegebenenfalls bevorzugt durch CN, Halogen,

insbesondere Chlor, Methyl, Trihalogenmethyl, Trifluormethylmercapto oder $NO_2$ substituierten Arylrest, insbesondere Phenyl, oder für Methoxycarbonyl oder für den Rest $V-SO_2-N-R^5$ steht, wobei V für Alkyl, Halogenalkyl oder Halogen, Trihalogenmethyl, CN, Methyl oder Nitro substituierten Arylrest steht.

Besonders bevorzugt sind Carbamate, in denen

$R^4$ für Phenyl oder Naphthyl steht, die gegebenenfalls substituiert sind durch Alkyl, Alkenyl, Alkoxy, Alkylmercapto mit jeweils 1 bis 5 C-Atomen, Dialkylamino, Dialkenylamino bis zu 3 C-Atomen je Alkyl- bzw. Alkenylteil, Halogen, insbesondere Chlor, Dioxolanyl oder den Rest $-N=CH-N\,(C_{1-4}\text{-Alkyl})_2$;

weiterhin sind besonders bevorzugte Carbamate, in denen

$R^4$ für 2,3-Dihydrobenzofuranyl, Benzodioxol, Benzothienyl, Pyrimidyl oder Pyrazolyl steht, die gegebenenfalls durch $C_{1-4}$-Alkyl, insbesondere Methyl oder Dialkylamino mit 1 bis 4 C-Atomen je Alkylteil substituiert sind;

weiterhin sind besonders bevorzugt Carbamate, in denen $R^4$ für einen Oximrest der allgemeinen Formel (IIa)

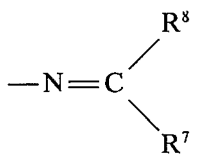

(IIa)

steht, in welcher

$R^7$ und $R^8$ gleich oder verschieden sind und für Alkyl, Cycloalkyl, Alkenyl, Alkinyl, Alkoxy, Alkylmercapto, Alkoxycarbonyl, Carbonylamid, Alkylmercaptoalkyl mit jeweils bis zu 5 C-Atomen, CN, Aryl, insbesondere Phenyl, Aralkyl, einen gegebenenfalls substituierten heterocyclischen Rest oder für Alkyl, das durch einen heterocyclischen Rest substituiert ist, stehen oder gemeinsam für einen gegebenenfalls durch $C_{1-4}$-Alkyl substituierten Dioxolanyl oder Dithiolanylrest stehen;

B. Carbonsäureestern der allgemeinen Formel (III)

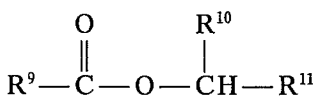

(III)

in welcher

$R^9$ für Alkyl, Aralkyl, Aryl oder Cycloalkyl steht, die gegebenenfalls substituiert sein können und
$R^{10}$ für Wasserstoff, Alkyl, Halogenalkyl, Alkenyl, Alkinyl, CN steht und
$R^{11}$ für Aryl oder einen Heterocyclus steht, oder gemeinsam mit $R^{10}$ einen gegebenenfalls substituierten Cyclopentenonring bildet;

besonders bevorzugt sind Carbonsäureester, in denen

$R^9$ für Alkyl mit 1 bis 6 C-Atomen, das gegebenenfalls durch gegebenenfalls halogensubstituiertes Phenyl substituiert ist, Cyclopropyl, das gegebenenfalls durch Alkyl, Alkenyl, Halogenalkyl oder Halogenalkenyl mit jeweils bis zu 6 C-Atomen substituiert ist oder für Phenyl, das gegebenenfalls durch Halogen substituiert ist, steht;

bevorzugt sind Carbonsäureester, in denen

$R^{10}$ für Wasserstoff, Alkyl mit 1 bis 6 C-Atomen, Halogenalkyl mit 1 bis 4 C-Atomen und bis zu 3 Halogenatomen, CN oder Äthinyl steht;

weiter sind besonders bevorzugt Carbonsäureester, in denen

$R^{11}$ für Phenyl steht, das gegebenenfalls durch $C_{1-4}$-Alkyl, Halogen, insbesondere Fluor oder Chlor, gegebenenfalls halogen- oder methylsubstituiertes Phenoxy, gegebenenfalls substituiertes Benzyl substituiert ist, ferner für Furanyl, Tetrahydrophthalimido, Benzodioxol,

die gegebenenfalls durch Halogen, insbesondere Chlor, Alkyl oder Alkenyl mit bis zu 4 C-Atomen oder Benzyl substituiert sind, steht und ferner für Cyclopentenon steht, das gegebenenfalls durch $C_{1-4}$-Alkyl, Furfuryl $C_{1-5}$-Alkenyl substituiert ist;

weiter sind besonders bevorzugt die natürlichen Pyrethroide.

Überraschenderweise ist die insektizide und/oder akarizide Wirkung der Wirkstoffkombinationen aus Phosphorsäureestern der Formel I und den insektiziden und akariziden Wirkstoffen wesentlich höher als die Wirkung der Einzelkomponenten bzw. die Summe der Wirkungen der Einzelkomponenten. Sie ist ferner wesentlich höher als die Wirkung der bereits bekannten Wirkstoffkombinationen aus 2-iso-Propoxy-phenyl-N-methyl-carbamat und Piperonylbutoxyd.

Somit stellen synergistische Mischungen, die die erfindungsgemäß verwendbaren phosphorhaltigen Verbindungen der Formel I enthalten, eine wertvolle Bereicherung der Technik dar.

Die Phosphorsäureester der Formel I sind nach üblichem Verfahren zugänglich (vgl. »Houben—Weyl, Methoden der Organischen Chemie, Bd. 12/1 bzw. Bd. 12/2«).

Als besonders vorteilhaft als Synergisten zu verwendende phosphorhaltige Verbindungen der Formel I seien beispielsweise genannt:

Phosphorsäuremethyldipropargylester
Phosphorsäureäthyldipropargylester
Phosphorsäurepropyldipropargylester
Phosphorsäureisopropyldipropargylester
Phosphorsäurebutyldipropargylester
Phosphorsäureisobutyldipropargylester

Zu den als Mischkomponenten zu verwendenden Carbamaten (Gruppe A) der Formel (II) gehören:

2-Methylphenyl-, 2-Äthylphenyl-, 2-n-Propylphenyl-, 2-Methoxyphenyl-, 2-Äthoxyphenyl-, 2-n-oder -iso-Propoxyphenyl-, 4-Methyl-phenyl-, 4-Äthylphenyl-, 4-n-Propylphenyl-, 4-Methoxyphenyl-, 4-Äthoxyphenyl-, 4-n-Propoxyphenyl-, 2-Allalphenyl-, 2-(1-Methylallyl)-phenyl-, 3-iso-Propyl-4-methoxyphenyl-, 3,4,5-Trimethylphenyl-,2,3-Dihydro-2,2-dimethylbenzofuran(7)-yl-, 2-[1,3-Dioxolan(2)yl-phenyl]-, 2,2-Dimethyl-1,3-benzodioxol(4)yl-, 2,2-Dimethyl- bzw. 1-Methyl-2,3-dihydro-benzofuran(4)yl-N-Methyl-carbamat, die entsprechenden -N-methyl-N-acetyl-, -N-methyl-N-trifluormethylthio-, -N-methyl-N-dichlormonofluormethylthio- bzw. -N-methyl-N-dimethylaminothio-carbamate.

Diese Verbindungen, ihre Herstellung und ihre Verwendung sind bekannt (vergleiche z. B. US-Patentschriften 3 009 855; 2 903 478 und 3 111 539).

Zu den weiterhin als Mischungskomponenten gegebenenfalls zu verwendenden Carbonsäureestern (Gruppe B) der Formel (III) gehören:

Essigsäure-[2,2,2-trichlor-1-(3,4-dichlorphenyl)-äthyl]-ester,
2,3,4,5-Tetrahydrophthalimidomethylchrysanthemat,
3-Phenoxybenzyl-[2,2-dimethyl-3-(2,2-dichlorvinyl)-cyclopropan]-carboxylat und
(5-Benzyl-furyl)-methyl-2,2-dimethyl-1-3-(2-methylpropenyl)-cyclopropancarboxylat.

Die aufgezählten Verbindungen sind bekannt und größtenteils allgemein bekannte Handelsprodukte (vergleiche R. Wegler »Chemie der Pflanzenschutz- und Schädlingsbekämpfungsmittel« Band 1, Seiten 87—118, Heidelberg (1970).

Wie bereits erwähnt, zeigen die neuen Wirkstoffkombinationen der erfindungsgemäß verwendbaren Phosphorsäureester der Formel (I) mit Carbamaten und/oder Carbonsäureestern eine hervorragende Wirkungssteigerung gegenüber den Einzelwirkstoffen bzw. gegenüber deren Summe.

Die Gewichtsverhältnisse der Wirkstoffgruppen können dabei in relativ großen Bereichen schwanken. Im allgemeinen werden die als Synergisten verwendeten phosphorhaltigen Verbindungen mit den übrigen Wirkstoffen im Verhältnis 0,1 : 10 bis 10 : 0,1 eingesetzt. Besonders geeignet haben sich jedoch Mischungsverhältnisse von 0,5 : 1,0 bis 3,0 : 1,0 erwiesen. Die Wirkstoffkombinationen bewirken nicht nur eine schnelle knock-down-Wirkung, sondern bewirken auch die nachhaltige Abtötung der tierischen Schädlinge, insbesondere von Insekten und Milben, die in der Landwirtschaft, in Forsten, im Vorrats- und Materialschutz sowie auf dem Hygienesektor vorkommen. Sie sind gegen normal sensible und resistente Arten sowie gegen alle oder einzelne Entwicklungsstadien wirksam.

Die Wirkstoffkombinationen können in die üblichen Formulierungen übergeführt werden, wie Lösungen, Emulsionen, Spritzpulver, Suspensionen, Pulver, Stäubermittel, Schäume, Pasten, lösliche Pulver, Granulate, Aerosole, Suspensions-Emulsionskonzentrate. Saatgutpulver, Wirkstoff-imprägnierte Natur- und synthetische Stoffe, Feinstverkapselungen in polymeren Stoffen und in Hüllmassen für Saatgut, ferner in Formulierungen mit Brennsätzen, wie Räucherpatronen, -dosen, -spiralen u. ä. sowie

ULV-Kalt- und Wärmenebel-Formulierungen.

Diese Formulierungen werden in bekannter Weise hergestellt, z. B. durch Vermischen der Wirkstoffe mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln. Im Falle der Benutzung von Wasser als Streckmittel können z. B. auch organische Lösungsmittel als Hilfslösungsmittel verwendet werden. Als flüssige Lösungsmittel kommen im wesentlichen in Frage: Aromaten, wie Xylol, Toluol, oder Alkylnaphthaline, chlorierte Aromaten oder chlorierte aliphatische Kohlenwasserstoffe, wie Chlorbenzole, Chloräthylene oder Methylenchlorid, aliphatische Kohlenwasserstoffe, wie Cyclohexan oder Paraffine, z. B. Erdölfraktionen, Alkohole, wie Butanol oder Glycol sowie deren Äther und Ester, Ketone, wie Aceton, Methyläthylketon, Methylisobutylketon oder Cyclohexanon, stark polare Lösungsmittel, wie Dimethylformamid und Dimethylsulfoxid, sowie Wasser; mit verflüssigten gasförmigen Streckmitteln oder Trägerstoffen sind solche Flüssigkeiten gemeint, welche bei normaler Temperatur und unter Normaldruck gasförmig sind, z. B. Aerosol-Treibgase, wie Halogenkohlenwasserstoffe sowie Butan, Propan, Stickstoff und Kohlendioxid; als feste Trägerstoffe: natürliche Gesteinsmehle, wie Kaoline, Tonerde, Talkum, Kreide, Quarz, Attapulgit, Montmorillonit oder Diatomeenerde und synthetische Gesteinsmehle, wie hochdisperse Kieselsäure, Aluminiumoxid und Silikate; als feste Trägerstoffe für Granulate: gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstengel; als Emulgier- und/oder schaumerzeugende Mittel: nichtionogene und anionische Emulgatoren, wie Polyoxyäthylen-Fettsäure-Ester, Polyoxy-äthylen-Fettalkohol-Äther, z. B. Alkylaryl-polyglykol-äther, Alkylsulfonate, Alkylsulfate, Arylsulfonate sowie Eiweißhydrolysate; als Dispergiermittel: z. B. Lignin, Sulfitablaugen und Methylcellulose.

Es können in den Formulierungen Haftmittel wie Carboxymethylcellulose, natürliche und synthetische pulverige, körnige oder latexförmige Polymere verwendet werden, wie Gummiarabicum, Polyvinylalkohol, Polyvinylacetat.

Es können Farbstoffe wie anorganische Pigmente, z. B. Eisenoxid, Titanoxid, Ferrocyanblau und organische Farbstoffe, wie Alizarin-, Azo- und Metallphthalocyaninfarbstoffe und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gew.-% Wirkstoff, vorzugsweise zwischen 0,5 und 90%.

Die Anwendung der Wirkstoffkombinationen erfolgt in Form ihrer handelsüblichen Formulierung und/oder den aus diesen Formulierungen bereiteten Anwendungsformen.

Der Wirkstoffgehalt der aus den handelsüblichen Formulierungen bereiteten Anwendungsformen kann in weiten Bereichen variieren. Die Wirkstoffkonzentration der Anwendungsform kann von 0,0000001 bis zu 100 Gew.-% Wirkstoff, vorzugsweise zwischen 0,01 und 10 Gew.-% liegen.

Die Anwendung geschieht in einer den Anwendungsformen angepaßten üblichen Weise.

Bei der Anwendung gegen Hygiene- und Vorratsschädlinge zeichnen sich die Wirkstoffkombinationen durch eine hervorragende Residualwirkung auf Holz und Ton sowie durch eine gute Alkalistabilität auf gekälkten Unterlagen aus.

## Beispiel A

### $LT_{100}$-Test

Testtiere: Phosphorsäureesterresistente Musca domestica (Stamm Weymanns)
Lösungsmittel: Aceton

Von den Wirkstoffen, Synergisten und Gemischen aus Wirkstoffen und Synergisten werden Lösungen hergestellt und 2,5 ml davon in Petrischalen auf Filterpapierscheiben von 9,5 cm Durchmesser pipettiert. Das Filterpapier saugt die Lösungen auf. Die Petrischalen bleiben so lange offen stehen, bis das Lösungsmittel vollständig verdunstet ist. Anschließend gibt man 25 Testtiere in die Petrischalen und bedeckt sie mit einem Glasdeckel.

Der Zustand der Testtiere wird bis zu 6 Stunden laufend kontrolliert. Es wird diejenige Zeit ermittelt, die für eine 100%ige knock-down-Wirkung erforderlich ist. Wird die $LT_{100}$ nach 6 Stunden nicht erreicht, wird der %-Satz der knock-down gegangenen Testtiere festgestellt.

Konzentrationen der Wirkstoffe, Synergisten und Gemische und ihre Wirkungen gehen aus der nachfolgenden Tabelle hervor.

Tabelle

LT 100-Test mit phosphorsäureester-resistenten Musca domestica (Stamm Weymanns)

| Wirkstoffe bzw. Synergisten<br>( ) Kennbuchstabe ( ) Bsp.-Nr. | Konzentration in % | LT 100 nach Minuten |
|---|---|---|
| 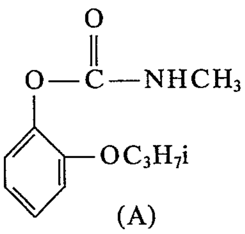<br>(A) | 1,0 | 360′ = 0% |
| 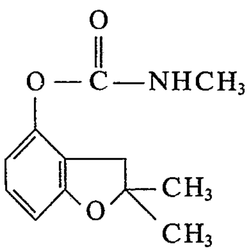<br>(B) | 1,0 | 360′ = 20% |
| 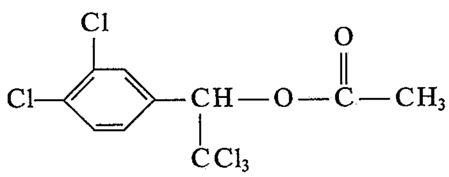<br>(C) | 1,0 | 360′ = 70% |
| 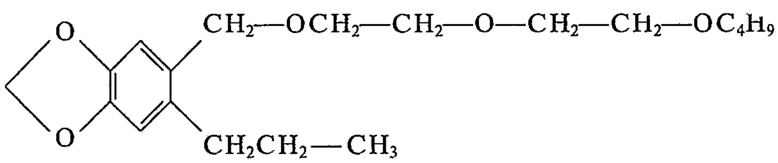<br>Piperonylbutoxy | 1,0 | 360′ = 0% |
| 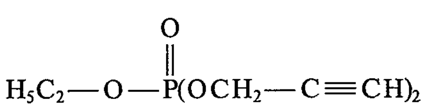<br>(1) | 1,0 | |

| Kennbuchstabe des Wirkstoffs | + | Synergist Beispiel Nr. | Konzentration Wirkstoff in % | + | Konzentration Synergist in % | LT 100 nach Minuten |
|---|---|---|---|---|---|---|
| A | + | Piperonylbutoxid | 1,0 | + | 1,0 | 180′ |
| A | + | 1 | 0,008 | + | 0,008 | 120′ |
| B | + | Piperonylbutoxid | 0,2 | + | 0,2 | 360′ |
| B | + | 1 | 0,008 | + | 0,008 | 105′ |
| C | + | Piperonylbutoxid | 1,0 | + | 1,0 | 360′ = 75% |
| C | + | 1 | 0,2 | + | 0,2 | 360′ |

Beispiel 1

Phosphorsäureäthyl-bis-propargylester

1 Mol Phosphorsäureäthylesterdichlorid und 2 g Phenothiazin werden in 350 ml Toluol gelöst und bei 10—20°C mit einem Gemisch aus 2,4 Mol Pyridin und 2 Mol Propargylalkohol versetzt. Man rührt 1 Stunde bei 20—30°C und 1 Stunde bei 60°C nach und filtriert vom ausgeschiedenen Hydrochlorid ab. Das Salz wird in wenig Wasser gelöst und die Lösung mit zweimal 100 ml Methylenchlorid extrahiert.

Vom zweiphasen Filtrat wird das Toluol abgezogen, der Rückstand wird in 500 ml Methylenchlorid gelöst und mit der Methylenchloridphase der Salzestraktion versetzt. Man wäscht diese Lösung mehrfach mit gesättigter Natriumbicarbonatlösung und Wasser und trocknet mit Natriumsulfat. Das Methylenchlorid wird abgezogen und der Rückstand fraktioniert. Kp: 99°C/0,03 torr (etwa 0,04 mbar). $n_D^{20}$: 1,4488

**Patentansprüche**

1. Phosphorsäureester der allgemeinen Formel

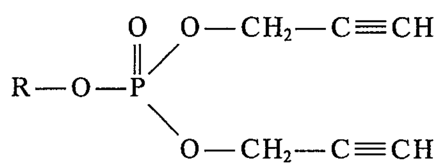

(I)

in welcher R für Alkyl mit 1 bis 4 Kohlenstoffatomen steht.

2. Phosphorsäureäthyl-bis-propargylester.

3. Verwendung von Phosphorsäureestern nach Anspruch 1 als Synergisten in Schädlingsbekämpfungsmitteln, welche als Wirkstoffe Carbamate und/oder Carbonsäureester enthalten.

**Claims**

1. Phosphoric acid esters of the general formula

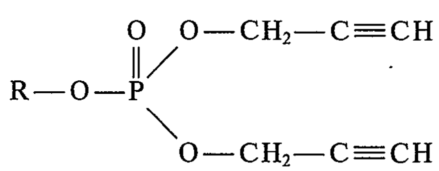

(I)

in which R represents alkyl with 1 to 4 carbon atoms.

2. Phosphoric acid ethyl bis-propargyl ester.

3. Use of phosphoric acid esters according to Claim 1 as synergistic agents in agents for combating pests, which contain as active compounds carbamates and/or carboxylic acid esters.

**Revendications**

1. Esters d'acide phosphorique de formule générale:

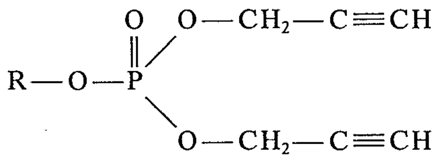

(I)

dans laquelle R représente un groupe alkyle contenant 1 à 4 atomes de carbone.

2. Ester éthyl-bis-propargylique de l'acide phosphorique.

3.Utilisation d'esters de l'acide phosphorique suivant la revendication 1 comme produits synergiques dans des agents parasiticides contenant, comme substances actives, des carbamates et/ou des esters d'acides carboxyliques.